# EUROPÄISCHE PATENTSCHRIFT

(11) **EP 1 304 010 B1**
(45) Veröffentlichungstag und Bekanntmachung des Hinweises auf die Patenterteilung: **08.10.2008**
(21) Anmeldenummer: 01956327.9
(22) Anmeldetag: 17.07.2001
(51) Int. Cl.: H04Q 7/32, H04Q 7/38

(54) **VERFAHREN ZUR VERBESSERTEN ZELLENAUSWAHL FÜR MEHR-BETRIEBSART-FUNKSTATIONEN IM RUHEZUSTAND**
METHOD FOR THE IMPROVED CELL SELECTION FOR MULTI-MODE RADIO STATIONS IN THE IDLE STATE
PROCEDE DE SELECTION AMELIOREE DE CELLULES POUR STATIONS RADIO MULTIMODES AU REPOS

(30) Priorität: 25.07.2000 DE 10036141
(43) Veröffentlichungstag der Anmeldung: 23.04.2003
(73) Patentinhaber: SIEMENS AKTIENGESELLSCHAFT, 80333 München (DE)
(72) Erfinder: FÄRBER, Michael, 82515 Wolfratshausen (DE); MENZEL, Christian, 82216 Maisach (DE); DILLINGER, Markus, 81737 München (DE); WAGNER, Georg, 85570 Ottenhofen (DE); RAAF, Bernhard, 81475 München (DE); KRAUSE, Jörn, 12107 Berlin (DE); ISAACS, Kenneth, Bournemouth, Dorset BH7 7HF (GB); THOMAS, David, Wynne, Romsey, Hampshire SO51 7DB (GB)
(86) Internationale Anmeldenummer: PCT/DE2001/002676
(87) Internationale Veröffentlichungsnummer: WO 2002/009464

(56) Entgegenhaltungen:
- EP-A- 0 701 337
- EP-A- 0 980 190
- WO-A-00/27158
- WO-A-90/13211
- WO-A-99/01005
- GB-A- 2 289 191

## Beschreibung

Die Erfindung betrifft ein Verfahren mit den oberbegrifflichen Merkmalen des Patentanspruchs 1, insbesondere ein Verfahren zur verbesserten Zellenauswahl für Mehr-Betriebsart-Funkstationen im Ruhezustand und Mehr-Betriebsart-funkstationen dafür, bzw. eine Mehr-Betriebsart-Funkstation zum Ausführen eines solchen Verfahrens.

In Funk-Kommunikationssystemen werden Informationen, beispielsweise Sprache, Bildinformationen oder andere Daten, mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System), oder andere Systeme der 3. Generation sind Frequenzen im Frequenzband von ca. 2000 MHz vorgesehen.

Insbesondere für die Teilnehmerstations-Funktionen von Zellauswahl (Cell-Selection), Zellwechsel (Cell-Reselection) und Übergang zu einer benachbarten Zelle (Handover) ist die Teilnehmerstation in derzeitigen Mobilfunksystemen verpflichtet, periodisch die Zellen im ihrem Umfeld zu untersuchen (monitoren), welche für eine Zellauswahl bzw. einen Zellwechsel im Ruhezustand (Idle-Mode) bzw, einen Handover im Verbindungszustand in Frage kommen.

In EP 0 701 337 ist ein Funkkommunikationssystem beschrieben, bei dem ausgehend von einer sogenannten "user priority" Zugriffsmethoden für Datenübertragungen priorisiert ausgewählt werden.

In GB 2 289 191 ist eine Methode für Handover-Verfahren einer "mobile station" zwischen mehreren Kommunikationssystemen beschrieben. Der Handover wird dabei entweder manuell angefordert oder automatisch durchgeführt. Dabei werden in der "mobile station" Zuordnungen von Funkzellen, die zu den verschiedenen Kommunikationssystemen gehören, abgespeichert.

Beim derzeit üblichen GSM-Standard (GSM: Global System for Mobile Communication) muss sich jede Teilnehmerstation im Ruhezustand außerdem stets über ihre Umgebungsbedingungen bezüglich kommunikationsfähiger Basisstationen informieren, um die Teilnehmerstation einer Zelle zuzuordnen, deren Nachrichtenkanal-Träger bzw. BCCH-Träger (BCCH: Broad Cast CHannel) sie verläßlich dekodieren kann. Ist dies der Fall, ist die Teilnehmerstation in der Lage, Systeminformationen und Paging-Nachrichten auszulesen. Paging-Nachrichten sind Such-Nachrichten, die über die Basisstationen ausgesendet werden, um bestimmte Teilnehmerstationen zu einem Rückruf zu veranlassen, um einen Verbindungsaufbau zu einer Teilnehmerstation von der Basisstationsseite aus zu veranlassen. Vorstehendes gilt prinzipiell auch für UMTS.

Sollte ein Verbindungswunsch vorliegen, kann die Teilnehmerstation nur in einer solchen Zelle mit hoher Wahrscheinlichkeit kommunizieren. Dabei gibt es insbesondere zwei Möglichkeiten der Zellauswahl: Entweder, dass die Teilnehmerstation kein Wissen über das Netz besitzt oder dass die Teilnehmerstation eine gespeicherte Liste von Nachrichtenkanal-Trägern besitzt.

Im ungünstigen ersten Fall muß die Teilnehmerstation alle Trägerfrequenzen absuchen, jeweils deren Empfangsfeldstärke (RXLEV) über einen Zeitraum messen und jeweils einen Mittelwert bilden. Die Träger mit den höchsten mittleren Empfangsfeldstärke-Werten (RXLEV(n)) sind am wahrscheinlichsten auch Nachrichtenkanal-Träger, z.B. sogenannte BCCH-Träger, wobei auf diesen Trägern kontinuierlich gesendet wird, was wiederum für die Messung der Empfangsfeldstärke wichtig ist.

Endgültig identifiziert werden die Nachrichtenkanal-Träger anhand der Frequenzkorrekturburst des Frequenz-Korrekturkanals. Sind die empfangenen Nachrichtenkanal-Träger gefunden, synchronisiert sich die Teilnehmerstation, beginnend beim Träger mit dem höchsten mittleren Empfangsfeldstärke-Wert, auf jeden Nachrichtenkanal-Träger auf und liest die Systeminformationen aus.

Basierend auf diesen Meßwerten wählt die Teilnehmerstation die am besten empfangbare Zelle aus (camping on a cell). Für die automatische Zellauswahl sind zwei Kriterien, das Pfadverlustkriterium (C1) und das Reselektionskriterium (C2) definiert. Das Pfadverlustkriterium-Kriterium wird für jede Zelle, für die ein mittlerer Empfangsfeldstärke-Wert ihres Nachrichtenkanal-Trägers ermittelt werden konnte, berechnet. Anhand dieses Kriteriums kann die optimale Zelle mit dem geringsten Pfadverlust ermittelt werden. Das ist die Zelle, für die das größte Pfadverlustkriterium größer Null (Cl >0) festgestellt werden kann.

Diese Standortbestimmung der Teilnehmerstation kann wesentlich beschleunigt werden, wenn eine Liste von Nachrichtenkanal-Trägern in der Chipkarte des Teilnehmers (SIM - Subscriber Identifikation Module) oder auf einem Speicherbaustein in der Teilnehmerstation gespeichert ist. Die Teilnehmerstation versucht dann zunächst sich anhand dieser Liste auf bekannte Nachrichtenkanal-Träger aufzusynchronisieren. Erst wenn sie keinen der gespeicherten Nachrichtenkanal-Träger finden kann, beginnt sie mit der normalen, vorstehend beschriebenen Suche nach einem geeigneten Nachrichtenkanal-Träger.

Wenn eine Teilnehmerstation sich auf eine Zelle festgelegt hat, soll sie weiterhin alle Nachrichtenkanal-Träger, die ihr über den Nachrichtenkanal genannt werden (BA: BCCH Allocation) beobachten, solange sie sich im Ruhezustand befindet. Befindet sie sich nicht mehr im Ruhezustand, z.B. wenn ein Verkehrskanal belegt wurde, dann überwacht sie nur noch die sechs stärksten benachbarten Nachrichtenkanal-Träger. Diese Liste der sechs stärksten benachbarten Nachrichtenkanal-Träger wird bereits im Ruhezustand angelegt und kontinuierlich geführt. Gemäß dem derzeitigen Standard soll die Teilnehmerstation den Nachrichtenkanal der Zelle, auf die sich die Teilnehmerstation festgelegt hat, dabei mindestens alle 30 Sekunden dekodieren. Mindestens einmal in fünf Minuten sind auch die vollständigen Informationen der sechs stärksten benachbarten Nachrichtenkanal-Träger auszulesen, mindestens alle 30 Sekunden ist die Basis-Sende-Empfangs-Stationskennung dieser sechs Nachrichtenkanal-Träger zu ermitteln. Damit ist die Teilnehmerstation in der Lage, Veränderungen in ihrer "Umgebung" festzustellen und entsprechend darauf zu reagieren. Im ungünstigsten Fall haben sich die Bedingungen so stark geändert, daß eine Neuwahl der Zelle, auf die sich die Teilnehmerstation zuvor festgelegt hatte, notwendig wird (Cell-Reselection).

Mit der Einführung neuer Mobilfunksysteme wie z.B. UMTS-TDD oder UMTS-FDD (T/FDD: Time/Frequency Division Duplex) wird es sinnvoll, sogenannte Mehrbetriebsart- bzw. Multimode-Teilnehmerstationen für z.B. Betrieb unter den Standards GSM und/oder UMTS-TDD und/oder UMTS-FDD betreiben zu können. Ein Grund hierfür ist u.a. die anfangs einerseits bereits breite Funkversorgung durch GSM und andererseits die Verfügbarkeit von UMTS nur in Ballungsgebieten.

Diese Multimode-Teilnehmerstationen sollen ebenfalls netzwerkgesteuert Zellwahl, Zellwechsel (in Idle- und evtl. Packet- oder Connected-Betriebszustand) und Handover (im Verbindungszustand) durchführen, wobei dies aber zusätzlich auch zwischen den verschiedenen Funksystemen geschehen können soll. Hierzu muß zusätzlich zu der Wahl des öffentlichen Mobilkommunikationsnetzes (PLMN) und Zellwahl/Zellwechsel eine Funkzugriffs-Technologie-Auswahl (RAT: Radio Access Technology) durchgeführt werden. Unter der Funkzugriffs-Technologie versteht man nach RAN WG2 GSM, UMTS etc., wobei UMTS-TDD, UMTS-FDD (TDD und FDD) zur gleichen Funkzugriffs-Technologie (RAT) gehören, aber verschiedene Funk-Zugriffs-Betriebsarten (Radio Access Modes) sind, so dass sie für das nachfolgend vorgeschlagene Verfahren prinzipiell auch wie verschiedene Funkzugriffs-Technologien angesehen werden können. Hierzu müssen existierende Funktionen in solcher Weise erweitert werden, daß ältere Teilnehmerstationen, welche diese Erweiterungen nicht "kennen", durch diese Erweiterungen nicht gestört werden (Problem der CrossPhase-Compatibility).
Diese verschiedenen Funkzugriffs-Technologien können zu folgenden Problemen führen:- für die am Ort einer Teilnehmerstation verfügbaren verschiedenen Funkzugriffs-Technologien muss jeweils eine große Anzahl von Zellen berücksichtigt werden, was zu langen Zeiten für die Messung der Empfangsfeldstärken führt, und
- eine Nachbarzellbeobachtung für eine andere Funkzugriffs-Technologie ist gegebenenfalls mit Leistungs-Einbußen bei der aktuell verwendeten Funkzugriffs-Technologie verbunden, da für die Nachbarzellbeobachtung Ressourcen der Teilnehmerstation verwendet werden.

Die Aufgabe der Erfindung besteht darin, ein Verfahren zur verbesserten Zellenauswahl für Mehr-Betriebsart-Funkstationen bzw. eine Mehr-Betriebsart-Funkstation dafür vorzuschlagen.

Diese Aufgabe wird durch das Verfahren mit den Merkmalen des Patentanspruchs 1 bzw. durch die Mehr-Betriebsart-Funkstation mit den Merkmalen des Patentanspruchs 13 gelöst.

Vorteilhafte Ausgestaltungen sind Gegenstand von abhängigen Ansprüchen.

Bei der Bestimmung der Netzinformationen, insbesondere RAT-Selektorlisten, für spätere Zugriffe, Zellwechsel oder Handover nur Signale in einem vorbestimmten Empfangsqualitätsbereich zu untersuchen bzw. zu berücksichtigen, insbesondere nur Signale, die bestimmte Schwellenwertkriterien erfüllen, reduziert die Anzahl von Signalen verschiedener empfangbarer Basis- bzw. Netzstationen und rationalisiert dadurch den Bestimmungsvorgang. Neben BCCH, FCCH als verwendbaren Kanälen für die Bestimmung der Empfangsqualität kann z.B auch der gemeinsame Pilotkanal CPICH (Common PIlot CHannel) verwendet werden, da z.B. andere RATs, wie z.B. bei CDMA 2000, dazu kommen können.

Insbesondere verringert sich die Zeit für die Messung der Empfangsfeldstärken der Nachbarzellen einer gerade als aktuell vorgegebenen oder verwendeten Zelle aufgrund der begrenzten Anzahl von zu untersuchenden Zellen. Entsprechend verringern sich auch die Synchronisationszeiten aufgrund der begrenzten Anzahl von auszuwertenden bzw. zu untersuchenden Zellen.

Dadurch ist dann u.U. nur eine begrenzte Anzahl von Zugriffstechnologien und/oder Netzen verfügbar, so dass vorteilhafterweise vorgesehen wird, die Bestimmung von Netzinformationen verfügbarer Signale weiterer Netzstationen und/oder Kommunikationsnetze durchzuführen, falls die Empfangsfeldstärke von Signalen von Netzstationen und/oder Kommunikationsnetzen mit bereits bekannten Netzinformationen den Empfangsqualitätsbereich unterschreitet oder falls die Empfangsfeldstärke von Signalen nur einer minimalen Anzahl von Netzstationen und/oder Kommunikationsnetzen mit bereits bekannten Netzinformationen den Empfangsqualitätsbereich überschreitet. Den Empfangsqualitätsbereich konfigurierbar zu halten, ermöglicht bzw. unterstützt eine solche Anpassbarkeit.

Die Netzinformationen zumindest ausgewählter von durch die Station verwendeter Schnittstellen, Netzstationen (BS(GSM), BS (UMTS)) und/oder Kommunikationsnetzen (GSM, UMTS) für spätere Zugriffe zu speichern verkürzt die spätere Suche nach einer geeigneten Schnittstelle insbesondere dann, wenn eine Verbindung am gleichen Ort aufzubauen ist, an dem eine vorherige Verbindung bewusst oder durch z.B. Empfangsprobleme abgebrochen wurde. Die Suche nach geeigneteren Schnittstellen kann in der Regel unter Einsatz geringerer Ressourcen der Station über einen längeren Zeitraum hinweg durchgeführt werden, da in vielen Fällen von einer solchen Situation ausgegangen werden kann.

Eine Teilnehmerstation kann vorteilhafterweise für mehrere der zuletzt besuchten Netze jeweils eine Liste von BCCH-Trägern führen oder auch andere Priorisierungen innerhalb einer Liste vornehmen.

Durch die Steuerung des Inhalts der Netzinformationen bzw. RAT-Selektorlisten und die Verwendung entsprechender Tabellen kann durch die Station oder das Netz gesteuert werden, welche Zellen für einen Zellwechsel oder Handover überhaupt in Frage kommen. Das bedeutet also, dass nicht das Netz sondern letztendlich die Teilnehmerstation selbst dafür verantwortlich ist, stets die aktuellen Empfangsbedingungen zu überwachen, die am besten empfangbare Zellen auszuwählen und bei sich verschlechternden Bedingungen alle möglichen Zugriffstechnologien bzw. Netze und deren zugehörige Zellen zu messen.

Die Zeit für die Messung der Empfangsfeldstärken der Nachbarzellen verringert sich aufgrund des vorhandenen Wissens über zuvor abgespeicherte und dadurch schnell verfügbare Netzinformationen bzw. RAT-Selektorlisten und deren Zellen.

Die vorteilhafte Mehr-Betriebsart-Funkstation ermöglicht das Ausführen eines solchen Verfahrens zum Bereitstellen von Netzinformationen unter Ausnutzung im wesentlichen bereits vorhandener baulicher Elemente.

Insbesondere ist eine einfache Erweiterbarkeit für Zellen an anderer oder neuer Kommunikationssysteme oder Netze ohne Kompatibilitätsprobleme mit existierenden Teilnehmerstationen möglich.

Ein Ausführungsbeispiel wird nachfolgend anhand der Zeichnung näher erläutert. Es zeigen:
- Fig. 1: ein beispielhaftes Funk-Kommunikationssystem mit einer mobilen Station, die sich im Bereich von Funkzellen verschiedener Funkzugriffs-Technologien befindet, und
- Fig. 2: eine Funkzugriffs-Technologie- bzw. RAT-Selektorliste.

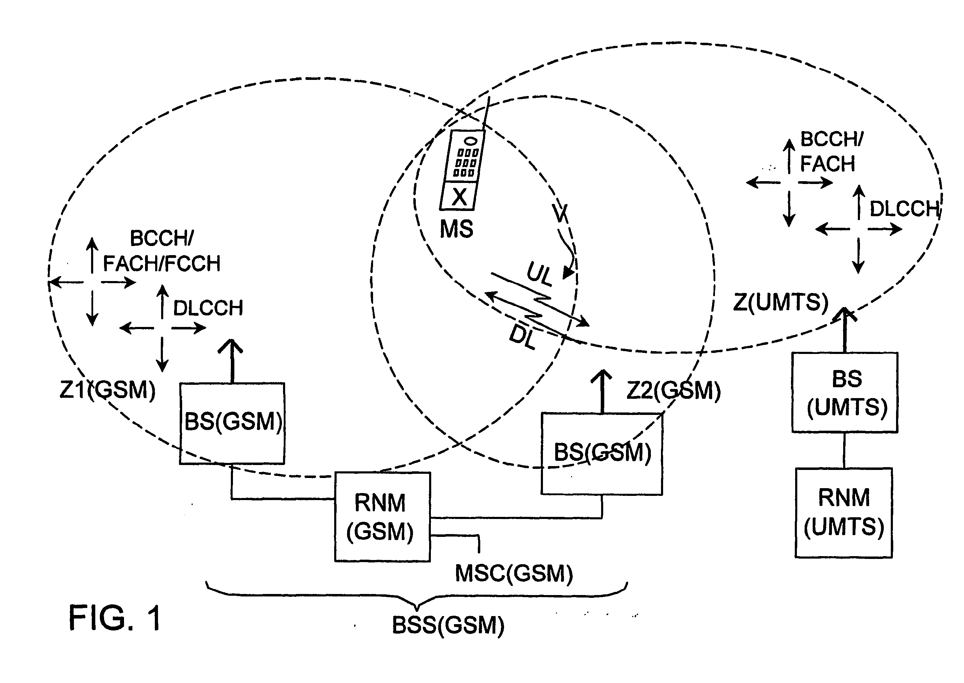

Das in Fig. 1 dargestellte Mobilfunksystem als Beispiel eines bekannten Funk-Kommunikationssystems besteht aus einer Vielzahl von Netzelementen, insbesondere von Mobilvermittlungsstellen MSC, Einrichtungen zum Zuteilen von funktechnischen Ressourcen RNM, Basisstationen BS und in der untersten Hierarchieebene Teilnehmerstationen MS.

Die Mobilvermittlungsstellen MSC, die innerhalb eines Funknetzes untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer der Einrichtungen RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle V eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z, Z1 Z2 gebildet. Bei einer Selektorisierung oder bei hierarchischen Zellstrukturen können pro Basisstation BS auch mehrere Funkzellen Z versorgt werden.

In Fig. 1 sind beispielhaft bestehende Verbindungen V als Abwärtsverbindungen DL und Aufwärtsverbindungen UL zur Übertragung von Nutzinformationen und Signalisierungsinformationen zwischen einer mobilen Teilnehmerstation MS und der entsprechend mit dieser in Verbindung stehenden Basisstation BS dargestellt. Weiterhin ist jeweils ein Kontroll- bzw. Organisationskanal (FACH oder BCCH: Broadcast Control CHannel) dargestellt, der zur Übertragung von Nutz- und Signalisierungsinformationen mit einer definierten Sendeleistung von jeder der Basisstationen BS für alle mobilen Stationen MS im Bereich der entsprechenden Funkzelle Z, Z1 bzw. Z2 bereitgestellt wird.

Wie aus Fig. 1 ersichtlich, befindet sich die mobile Teilnehmerstation MS im Bereich von drei Funkzellen Z, Z1 und Z2. Dabei gehören zwei Funkzellen Z1 und Z2 zu einem Funknetz, das unter dem GSM-Standard betrieben wird. Die entsprechenden Einrichtungen bzw. Funkzellen sind mit einem geklammerten Index (GSM) gekennzeichnet. Die dritte Funkzelle Z gehört zu einem Funknetz, das unter dem UMTS-Standard betrieben wird. Die entsprechenden Netzbestandteile sind mit einem geklammerten Index (UMTS) gekennzeichnet.

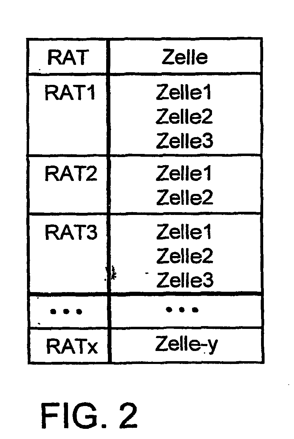

Um der Teilnehmerstation zu ermöglichen, mit den Basisstationen BS(GSM) bzw. BS(UMTS) der verschiedenen Netze zu kommunizieren, werden vorteilhafterweise eine oder mehrere separate Funkzugriffs-Technologie-Listen bzw. RAT-Selektorlisten eingesetzt. Die beispielhaft in Fig. 2 dargestellte RAT-Selektorliste bzw. RAT-Auswahlliste weist zwei Spalten auf. In der ersten Spalte sind verschiedene zugreifbare Funknetze RAT1 - RATx aufgelistet, in der zweiten Spalte Angaben über deren einzelne Funkzellen Zelle1 -Zelle-y.

Vorteilhafterweise weist diese RAT-Selektorliste ihrerseits wiederum eine Priorisierung hinsichtlich der vom Teilnehmer bzw. dessen Station MS bevorzugt zu verwendenden Funkzugriffs-Technologie RAT1 - RATx auf. Die erste Zeile mit der Funkzugriffs-Technologie RAT1 kann z.B. einem GSM-Netz mit einem bestimmten Betreiber zugeordnet sein, die zweite Zeile mit der Funkzugriffs-Technologie RAT2 kann z.B. einem UMTS-Netz mit einem bestimmten Betreiber zugeordnet sein und die dritte Zeile mit der Funkzugriffs-Technologie RAT3 kann z.B. einem anderen GSM-Netz mit einem bestimmten anderen Betreiber zugeordnet sein. Im UMTS-Netz sind die Betriebsarten FDD und TDD nach derzeitigem Standardisierungsvokabular eine Funkzugriffs-Technologie RAT. Sie können hier aber prinzipiell auch als verschiedene Funkzugriffs-Technologien angesehen werden. Sofern eine Verbindung zu einem Netz der ersten Funkzugriffs-Technologie RAT1 aufbaubar ist, bevorzugt die Teilnehmerstation insbesondere für von ihr aus abgehende Rufe bzw. Verbindungen den Zugriff auf dieses Netz.

Vorteilhaft ist auch eine Priorisierung der einzelnen Zellen Zelle1 - Zelle-y, die jeweils einer bestimmten Zugriffstechnologie RAT1 - RATx bzw. Netz zugeordnet sind. Die Zellpriorisierung erfolgt dabei insbesondere anhand der Empfangsfeldstärke RXLEV-NCELL(n) und ihres geringeren Pfadverlustes im Vergleich zur aktuellen Zelle Z, Z1 bzw. Z2 in einer geordneten Liste bevorzugter Zellen Zelle1 - Zelle-y. Die Empfangsfeldstärke RXLEV impliziert, dass der Vergleich anhand des Empfangspegels erfolgt. Innerhalb einer Funkzugriffs-Technologie RAT bzw. eines Radio Access Modes wäre aber auch eine Priorisierung anhand eines anderen Meßwertes denkbar, z.B. für die FDD-Betriebsart die Verwendung von Chip-Energie pro empfangener Leistungsdichte im Frequenzband (Ec/No).

Priorisierungen können natürlich auch abhängig von zu wählenden Diensten (services) vorgenommen werden.

Gemäß einer ersten Ausführungsform können solche RAT-Selektorlisten zweckmäßigerweise auf der Teilnehmerindividuellen Chipkarte bzw. "SIM"-Karte oder in einem Speicherbereich X der mobilen Teilnehmerstation MS selber gespeichert werden. Das Abspeichern der insbesondere zuletzt verwendeten RAT beschleunigt das spätere Einbuchen nach einer Deaktivierung der Teilnehmerstation oder dem Ausfall einer bestehenden Verbindung.

Insbesondere gibt es hier wieder die beiden Möglichkeiten:
- die Teilnehmerstation besitzt kein Wissen über das Netz bzw.
- die Teilnehmerstation besitzt eine gespeicherte RAT-Selektorliste.

Im ungünstigen ersten Fall muß die Teilnehmerstation alle RAT's und deren Zellen absuchen, die jeweilige Empfangsfeldstärke RXLEV messen und jeweils einen Mittelwert bilden. Die Teilnehmerstation synchronisiert sich dann, beginnend bei den Zellen Zelle1 - Zelle-y mit dem höchsten Empfangsfeldstärke-Wert, auf die einzelnen Zellen auf und liest die entsprechenden Systeminformationen aus.

Diese Standortbestimmung der Teilnehmerstation kann wesentlich beschleunigt werden, wenn, wie im zweiten Fall, eine RAT-Selektorliste im SIM des Teilnehmers oder direkt in dem Speicher X der Teilnehmerstation gespeichert ist. Die Teilnehmerstation versucht dann zunächst sich anhand dieser RAT-Selektorliste beim höchst priorisierten RAT1 (in Fig. 1 z.B. GSM) auf dessen bekannte Zellen (in Fig. 1 z.B. Z1, Z2) aufzusynchronisieren. Findet die mobile Teilnehmerstation keine entsprechenden Zellen Z1, Z2, dann wiederholt die Teilnehmerstation dies für den nächst-priorisierten RAT2 (in Fig. 1 z.B. UMTS mit Zelle Z). Erst wenn sie keine der in der RAT-Selektorliste gespeicherten Zellen (Zelle1 - Zelle-y) finden kann, beginnt sie mit der normalen Suche.

Ein Teilnehmerstation MS kann für mehrere der zuletzt besuchten Netze (PLMN) jeweils eine eigene RAT-Selektorliste führen.

Vorteilhaft ist dabei, die ermittelten Werte bzw. Daten der zuletzt verwendeten Zugriffstechnologie RATx bzw. Zugriffstechnologien zum Beschleunigen des zukünftigen Einbuchens abzuspeichern. Erfolgt dieses Abspeichern auf der höchst priorisierten Speicherstelle der RAT-Selektorliste, so versucht sich die Teilnehmerstation MS bei einem erneuten Einschalten zuerst in das Netz bzw. die Zelle einzubuchen, in der sie sich zuletzt befand, was besonderen Vorteil für Teilnehmer bietet, die sich überwiegend ortsfest aufhalten.

Im einfachsten Fall existiert nur eine Speichermöglichkeit, welche die zuletzt verwendete Zugriffstechnologie RATx bzw. die Daten eines entsprechenden Netzes speichert. Im Extremfall kann dies unabhängig von Nachrichtenkanal-Zugriffslisten (BA-Listen) erfolgen. Ist das Einbuchen mit dieser RATx nicht erfolgreich, muss die Teilnehmerstation MS mit den übrigen Zugriffstechnologien und/oder Netzen RAT1 - RAT3 ohne weiteres Vorwissen weiterarbeiten.

Diese einzelne Speicherinformation über die zuletzt verwendete Zugriffstechnologie und/oder das zuletzt verwendete Netz kann durch eine Liste mit mehreren Einträgen mit Angaben über besuchte bzw. verwendete Zugriffstechnologien RATs bzw. Netze in absteigender Priorität erweitert werden, bis hin zu dem Fall, daß alle denkbar möglichen RATs in dieser Liste aufgeführt sind, also alle Zugriffstechnologien RATs bzw. Netze eine zugewiesene Priorität haben. Dies schließt natürlich auch die Möglichkeit ein, freie Speicherplätze zur Aufnahme von bislang nicht registrierten Zugriffstechnologien RATs bzw. Netzen zu belassen.

Gemäß einer zweiten bevorzugten Ausführungsform wird ausgenutzt, dass durch die Einführung von Schwellwerten für die Initiierung von Teilnehmerstations-Messungen nur eine begrenzte Anzahl von Zugriffstechnologien und/oder Netzen verfügbar ist.

Die Teilnehmerstation misst dazu periodisch die Empfangsfeldstärke RXLEV der zu der am höchsten priorisierten Zugriffstechnologie RAT gehörenden und empfangbaren Zellen, die bestimmte Schwellenwertkriterien erfüllen. Im Falle, dass die Empfangsfeldstärke dieser Zellen Z, Z1, Z2 einen konfigurierbaren Schwellwert unterschreitet bzw. nur eine minimale (konfigurierbare) Anzahl von Zellen Z, Z1, Z2 diesen konfigurierbaren Schwellwert überschreiten, wird die Teilnehmerstation MS alle verfügbaren Zugriffstechnologie RAT's und/oder Netze und deren Zellen Z, Z1, Z2 messen, oder zumindest weitere RATS, bis eine ausreichende Zahl von Zellen Z, Z1, Z2 gefunden wurde. Dies gilt selbstverständlich auch entsprechend, wenn die minimale Anzahl unterschritten wird.

Das bedeutet also, dass nicht das Netz, sondern die Teilnehmerstation MS selbst dafür verantwortlich ist, stets die aktuellen Empfangsbedingungen zu überwachen, die am besten empfangbare Zellen auszuwählen und sich bei sich verschlechternden Bedingungen alle verfügbaren Zugriffstechnologien RAT's bzw. Netze und deren zugehörige Zellen Z, Z1, Z2 zu messen. Die Ergebnisse können dann in einer RAT-Liste bzw. RAST-Selektorliste zwischen- oder abgespeichert werden.

Die Inhalte dieser RAT-Selektorlisten können prinzipiell auch noch dynamisch während des Betriebes geändert werden, wobei die Änderungszyklen vorteilhafterweise nicht kleiner als einige Sekunden werden sollten. Ein Kriterium für die Dauer solcher Änderungszyklen ist z.B. die Größe der Zellen und die Geschwindigkeit, mit der die Teilnehmerstation MS üblicherweise oder tatsächlich durch eine solche Zelle Z hindurch bewegt wird, also die Aufenthaltsdauer im Bereich einer Zelle Z. Eine andere Basis dieser Änderungen könnte beispielsweise die Verkehrslast sein, wobei überlastete Nachbarzellen aus der Nachbarzellenliste herausgenommen und dadurch von sich bewegenden Teilnehmerstationen nicht mehr selektiert werden. Ferner ist auch ein vom Netz angeordneter RAT-Wechsel, unter Umgehung der obigen Bedingung, möglich.

Weiterhin können die Listen für Ruhe- und Verbindungszustand unterschiedlich angelegt werden, was auch Teilnehmerstationsspezifisch und/oder ähnlich zu GSM vorgesehen werden kann. Bezüglich dieser Erfindung führt das z.B. zur Vermeidung der Übertragung nicht benötigter Informationen, indem der Teilnehmerstation MS im Verbindungszustand nur die Nachbarzellenlisten für die Systeme und/oder Netze gesendet werden, welche die Teilnehmerstation MS auch tatsächlich unterstützt bzw. unterstützen darf. Dies bietet die Möglichkeit einer teilnehmerspezifischen Vorauswahl der Nachbarzellenlisten.

Bei dieser Ausführungsform wird also ausgenutzt, dass durch die Einführung von Schwellwerten für die Initiierung von Teilnehmerstationsmessungen nur eine begrenzte Anzahl von Zugriffstechnologien und/oder Netzen verfügbar ist.

Im einfachsten Fall existiert dabei nur eine Speichermöglichkeit, welche die zuletzt verwendete Zugriffstechnologie RAT und/oder das zuletzt verwendete Netz speichert. Sind Messungen darin nicht erfolgreich, muss die Teilnehmerstation MS für die übrigen Zugriffstechnologien RAT bzw. Netze Messungen ohne weiteres Vorwissen durchführen.

Diese einzelne Speicherinformation kann durch eine Liste mit mehreren Einträgen mit Zugriffstechnologien RATs bzw. Netzen in absteigender Priorität erweitert werden. In diesem Fall werden die Messungen solange durchgeführt, bis eine ausreichende Zahl von Zellen gefunden wurde.

Allgemein kann die Auswahl einer Zugriffstechnologie RAT oder eines bestimmten Kommunikationsnetzes innerhalb einer Zugriffstechnologie RAT- optional auch von z.B. gewünschten Diensten abhängig gemacht werden. So kann für eine Sprachverbindung eine Kommunikation über ein kostengünstiges GSM-Netz ausreichen, während für eine hochratige Datenverbindung eine Verbindung über ein teures UMTS-Kommunikationsnetz bevorzugt werden würde.

## Patentansprüche

1. Verfahren zur verbesserten Auswahl eines Kommunikationsnetzes (GSM, UMTS) für eine Station (MS),
- bei dem an der Station (MS) Signale (BCCH, FCCH) von mehreren Netzstationen (BS(GSM), BS(UMTS)) empfangen werden, wobei jede Netzstation (BS(GSM), BS(UMTS)) einem von mehreren Kommunikationsnetzen (GSM, UMTS) zugeordnet ist,
- bei dem die Station (MS) mit Hilfe der empfangenen Signale (BCCH,FCCH) Netzinformationen der Kommunikationsnetze (GSM, UMTS) abhängig von einer Empfangsqualität der Signale bestimmte,
- bei dem die Station (MS) mit Hilfe der Netzinformationen (RAT1,..., RATx, Zelle1,...,Zelle-y) eine für einen Datenaustausch verwendbare Netzstation (BS(GSM), BS(UMTS)) auswählt,
- bei dem der Datenaustausch über eine Schnittstelle (V) der ausgewählten Netzstation (BS(GSM), BS(UMTS)) durchgeführt wird,
**dadurch gekennzeichnet,**
- **dass** bei der Bestimmung der Netzinformationen (RAT1,..., RATx, Zelle1,...,Zelle-y) für spätere Zugriffe, Zellwechsel oder Handover nur diejenigen Signale (BCCH, FCCH) untersucht werden, die in einem vorbestimmten Empfangsqualitätsbereich vorgegebene. Schwellenwertkriterien erfüllen, und
- **dass** der Empfangsqualitätsbereich abhängig von der Empfangsqualität der Signale und von der Anzahl der für einen Datenaustausch verwendbaren Netzstationen konfiguriert wird.

2. Verfahren nach Anspruch 1, **dadurch gekennzeichnet, dass** die Bestimmung von Netzinformationen (RAT1,...,RATx, Zelle1,...,zelle-y) mit Hilfe von Signalen weiterer Netzstationen (BS(GSM), BS(UMTS)) erfolgt, falls bei den empfangenen Signalen einer konfigurierbaren Anzahl von Netzstatioi nen (BS(GSM), BS(UMTS)) Empfangsfeldstärken den Empfangsqualitätsbereich unterschreiten und die Netzstationen (BS(GSM), BS(UMTS)) Kommunikationsnetzen (GSM, UMTS) mit bereits bekannten Netzinformationen (RAT1, ...,RATx, Zelle1,...,Zelle-y) zugeordnet sind.

3. Verfahren nach Anspruch 1 oder 2, **dadurch gekennzeichnet, dass** die Bestimmung von Netzinformationen (RAT1, ..., RATx, Zelle1,...,Zelle-y) mit Hilfe von Signalen weiterer Netzstationen (BS (GSM), BS (UMTS) ) erfolgt, falls die Empfangsfeldstärke der Signale einer minimalen Anzahl von Netzstationen (BS(GSM), BS(UMTS)) den Empfangsqualitätsbereich überschreitet und die Netzstationen (BS (GSM), BS(UMTS)) Kommunikationsnetzen (GSM, UMTS) mit bereits bekannten Netzinformationen (RAT1,...,RATx, Zelle1,...;Zelle-y) zuzugeordnet sind.

4. Verfahren nach einem der vorhergehenden Ansprüche, **dadurch gekennzeichnet, dass** der konfigurierbare Empfangsqualitätsbereich bei einer zu geringen Anzahl von für den Datenaustausch verwendbaren Netzstationen (BS(GSM), BS(UMTS)) sukzessiv von einem Standardwert aus erweitert wird.

5. Verfahren nach einem der vorhergehenden Ansprüche,
**dadurch gekennzeichnet, dass** die Netzinformationen (RAT1, ... , RATx, Zelle1, ...,Zelle-y) von durch die Station (MS) zumindest ausgewählter Schnittstellen (V) und/oder Netzstationen (BS(GSM), BS (UMTS) ) und/oder Kommunikationsnetzen (GSM, UMTS) für spätere Zugriffe gespeichert werden.

6. Verfahren nach einem der vorhergehenden Ansprüche, **dadurch gekennzeichnet, dass** die zuletzt verwendeten Netzinformationen (RAT1,...,RATx, Zelle1,...,Zelle-y) gespeichert werden.

7. Verfahren nach einem der vorhergehenden Ansprüche, **dadurch gekennzeichnet, dass** zumindest ein Teil der Netzinformationen (RAT1,...,RATx, Zelle1,...,Zelle-y) aktualisierbar gespeichert wird.

8. Verfahren nach einem der vorhergehenden Ansprüche, **dadurch gekennzeichnet, dass** die Netzinformationen (RAT1,...,R.ATx, Zelle1,....Zelle-y) in der Station (MS) oder auf einem in der Station (MS) einsetzbaren Datenträger gespeichert werden.

9. Verfahren nach einem der vorhergehenden Ansprüche, **dadurch gekennzeichnet, dass** als Netzinformationen (RAT1,...,RATx, Zelle1,...,Zelle-y) Zugriffsdaten über verschiedene zugreifbare Funknetze (RAT1,...,RATx) und/oder einzelne Funkzellen (Zelle1,....,Zelle-y) abgespeichert werden.

10. Verfahren nach einem der Ansprüche 5 bis 9, **dadurch gekennzeichnet, dass** von der Station (MS) bei fehlenden geeigneten, gespeicherten Netzinformationen (RAT1,...,RATx, Zelle1,...,Zelle-y) weitere verfügbare Schnittstellen (V) und/oder Zellen (Z, Z1, Z2) und/oder Netzstationen (BS(GSM), BS(UMTS)) und/oder Kommunikationsnetze (GSM, UMTS) auf deren Eignung für einen Verbindungsaufbau untersucht werden.

11. Verfahren nach einem der vorhergehenden Ansprüche, **dadurch gekennzeichnet, dass** die Netzinformationen (RAT1,...,RATx, Zelle1,...,Zelle-y) während des Betriebes dynamisch geändert werden.

12. Verfahren nach einem der vorhergehenden Ansprüche, **dadurch gekennzeichnet, dass** die Netzinformationen (RAT1,...,RATx, Zelle1,...,Zelle-y) für Ruhe- bzw. Verbindungszustand und/oder für verschiedene Dienste unterschiedlich priorisiert werden und/oder innerhalb verfügbarer Funkzugriffs-Technologien (RAT1,...,RATx) uud/oder Funkzellen (Zelle1,...,Zelle-y; Z, Z1, Z2) priorisiert werden.

13. Mehr-Betriebsart-Funkstation (MS) zum Ausführen des Verfahrens nach einem der vorhergehenden Ansprüche, wobei die Funkstation (MS)
- eine Sende- und Empfangseinrichtung zum Austauschen von Daten jeweils über zumindest eine Schnittstelle (V) einer Netzstation (BS) verschiedener Kommunikationsnetze (GSM, UMTS),
- eine Auswahleinrichtung zum priorisierten Bestimmen und/oder Auswählen einer Schnittstelle (V) und/oder Netzstation (BS) anhand deren Netzinformationen (RAT1 - RATx, Zelle1 - Zelle-y) für den Austausch von Daten und
- eine Speichereinrichtung (X) zum Speichern der Netzinformationen (RAT1 - RATx, Zelle1 - Zelle-y) aufweist,
**dadurch gekennzeichnet, dass**
- in der Speichereinrichtung (X) ein Speicherraum zum Speichern der Netzinformationen (RAT1 - RATx, Zelle1 - Zelle-y) zumindest ausgewählter, durch die Station (MS) verwendeter Schnittstellen (V), Netzstationen (BS(GSM), BS(UMTS)) und/oder Kommunikationsnetze (GSM, UMTS) für spätere Zugriffe bereitgestellt ist, und dass
- die Auswahleinrichtung zum Bestimmen der Netzinformationen (RAT1 - RATx, Zelle1 Zelle-y) für spätere zugriffe, Zellwechsel und/oder Handover anhand von Signalen (BCCH, FCCH) in einem vorbestimmten Empfangsqualitätsbereich ausgebildet ist.

## Claims

1. Method for improved selection of a communications network (GSM,UMTS) for a station (MS),
- in which the station (MS) receives signal (BCCH,FCCH) from a plurality of network stations (BS(GSM), BS(UMTS)), where each network station (BS(GSM), BS(UMTS)) is associated with one of a plurality of communications networks (GSM,UMTS),
- in which the station (MS) uses the received signals (BCCH,FCCH) to determine network information for communications networks (GSM,UMTS) on the basis of a reception quality for the signals,
- in which the station (MS) uses the network information (RAT1,...,RATx, cell1,...,cell-y) to select a network station (BS(GSM, BS(UMTS)) which can be used for data interchange,
- in which the data interchange is made via an interface (V) in the selected network station (BS(GSM), BS(UMTS)),
**characterized**
- **in that** determining the network information (RAT1,...,RATx, cell1,...,cell-y) for subsequent access operations, cell changes or handovers involves only those signals (BCCH,FCCH) which satisfy threshold value criteria prescribed in a predetermined reception quality range being examined, and
- **in that** the reception quality range is configured on the basis of the reception quality of the signals and on the basis of the number of network stations which can be used for data interchange.

2. Method according to Claim 1, **characterized in that** network information (RAT1,...,RATx, cell1,...,cell-y) is determined using signals from further network stations (BS(GSM), BS(UMTS)) if reception fields strengths for the received signals for a configurable number of network stations (BS(GSM), BS(UMTS)) are below the reception quality range and the network stations (BS(GSM), BS(UMTS)) are associated with communications networks (GSM, UMTS) with network information (RAT1,...,RATx, cell1,...,cell-y) which is already known.

3. Method according to Claim 1 or 2, **characterized in that** network information (RAT1,...,RATx, cell1,...,cell-y) is determined using signals from further network stations (BS(GSM), BS (UMTS)) if the reception field strengths for the signals from a minimal number of network stations (BS(GSM), BS (UMTS)) exceeds the reception quality range and the network stations (BS(GSM), BS (UMTS)) are associated with communications networks (GSM, UMTS) with network information (RAT1,...,RATx, cell1,...,cell-y) which is already known.

4. Method according to one of the preceding claims,
**characterized in that** the configurable reception quality range is extended progressively from a standard value if the number of network stations (BS(GSM), BS(UMTS)) which can be used for the data interchange is too small.

5. Method according to one of the preceding claims,
**characterized in that** the network information (RAT1,...,RATx, cell1,...,cell-y) from at least selected interfaces (V) and/or network stations (BS(GSM), BS(UMTS)) and/or communications networks (GSM, UMTS) by the station (MS) is stored for subsequent access operations.

6. Method according to one of the preceding claims,
**characterized in that** the last network information (RAT1,...,RATx, cell1,...,cell-y) used is stored.

7. Method according to one of the preceding claims,
**characterized in that** at least some of the network information (RAT1,...,RATx, cell1,...,cell-y) is stored in updatable form.

8. Method according to one of the preceding claims,
**characterized in that** the network information (RAT1,...,RATx, cell1,...,cell-y) is stored in the station (MS) or on a data storage medium which can be used in the station (MS).

9. Method according to one of the preceding claims,
**characterized in that** the network information (RAT1,...,RATx, cell1,...,cell-y) stored is access data relating to various accessible radio networks (RAT1,...,RATx) and/or individual radio cells (cell1,...,cell-y) .

10. Method according to one of Claims 5 to 9, **characterized in that** in the event of a lack of suitable stored network information (RAT1,...,RATx, cell1,...,cell-y), the station (MS) examines further available interfaces (V) and/or cells (Z, Z1, Z2) and/or network stations (BS(GSM), BS(UMTS)) and/or communications networks (GSM, UMTS) for their suitability for connection setup.

11. Method according to one of the preceding claims,
**characterized in that** the network information (RAT1,...,RATx, cell1,...,cell-y) is changed dynamically during operation.

12. Method according to one of the preceding claims,
**characterized in that** the network information (RAT1,...,RATx, cell1,...,cell-y) is given different priorities for the idle and connection states and/or for various services and/or is given priorities within available radio access technologies (RAT1,...,RATx) and/or radio cells (cell1,...,cell-y; Z, Z1, Z2).

13. Multimode radio station (MS) for carrying out the method according to one of the preceding claims,
where the radio station (MS) has
- a transmission and reception device for interchanging data in each case via at least one interface (V) in a network station (BS) in various communications networks (GSM, UMTS),
- a selection device for prioritized determination and/or selection of an interface (V) and/or network station (BS) on the basis of the latter's network information (RAT1 - RATx, cell1 - cell-y) for interchanging data, and
- a memory device (X) for storing network information (RAT1 - RATx, cell1 - cell-y),
**characterized in that**
- the memory device (X) is provided with a storage space for storing the network information (RAT1 - RATx, cell1 - cell-y) for at least selected interfaces (V), network stations (BS(GSM), BS(UMTS)) and/or communications networks (GSM, UMTS) used by the station (MS) for subsequent access operations, and **in that**
- the selection device is designed for determining the network information (RAT1 - RATx, cell1 - cell-y) for subsequent access operations, cell changes and/or handovers on the basis of signals (BCCH, FCCH) in a predetermined reception quality range.

## Revendications

1. Procédé pour la sélection améliorée d'un réseau de communication ( GSM, UMTS ) pour une station ( MS ),
- dans lequel, dans la station ( MS ), on reçoit des signaux ( BCCH, FCCH ) de plusieurs stations de réseau ( BS ( GSM ), BS ( UMTS ) ), chaque station de réseau ( BS ( GSM ), BS ( UMTS ) ) étant associée à l'un des réseaux de communication ( GSM, UMTS ),
- dans lequel la station ( MS ) détermine à l'aide des signaux reçus ( BCCH, FCCH ) des informations de réseau des réseaux de communication ( GSM, UMTS ) en fonction d'une qualité de réception des signaux,
- dans lequel la station ( MS ) sélectionne à l'aide des informations de réseau ( RAT1, ..., RATx, Zelle1, ..., Zelle-y ) une station de réseau ( BS ( GSM ), BS ( UMTS ) ) utilisable pour un échange de données,
- dans lequel l'échange de données s'effectue par l'intermédiaire d'une interface ( V ) de la station de réseau sélectionnée ( BS ( GSM ), BS ( UMTS ) ),
**caractérisé par le fait que**
- lors de la détermination des informations de réseau ( RAT1, ..., RATx, Zelle1, ..., Zelle-y ) en vue d'accès, changements de cellule ou handovers ultérieurs, on n'examine que les signaux ( BCCH, FCCH ) qui satisfont à des critères de valeur de seuil prescrits dans une plage de qualité de réception prédéterminée, et
- on configure la plage de qualité de réception en fonction de la qualité de réception des signaux et du nombre des stations de réseau utilisables pour un échange de données.

2. Procédé selon la revendication 1, **caractérisé par le fait que** la détermination d'informations de réseau (RAT1, ..., RATx, Zelle1, ..., Zelle-y ) s'effectue à l'aide de signaux d'autres stations de réseau (BS(GSM), BS(UMTS)) si, pour les signaux reçus d'un nombre configurable de stations de réseau (BS(GSM), BS(UMTS)), des intensités de champ de réception sont inférieures à la plage de qualité de réception et les stations de réseau (BS(GSM), BS(UMTS)) sont associées à des réseaux de communication ( GSM, UMTS ) avec des informations de réseau (RAT1, ..., RATx, Zelle1, ..., Zelle-y ) déjà connues.

3. Procédé selon la revendication 1 ou 2, **caractérisé par le fait que** la détermination d'informations de réseau ( RAT1, ..., RATx, Zelle1, ..., Zelle-y ) s'effectue à l'aide de signaux d'autres stations de réseau ( BS ( GSM ), BS ( UMTS ) ) si l'intensité de champ des signaux d'un nombre minimal de stations de réseau ( BS ( GSM ), BS ( UMTS ) ) est supérieure à la plage de qualité de réception et les stations de réseau ( BS ( GSM ), BS ( UMTS ) ) sont associées à des réseaux de communication ( GSM, UMTS ) avec des informations de réseau ( RAT1, ..., RATx, Zelle1, ..., Zelle-y ) déjà connues.

4. Procédé selon l'une des revendications précédentes, **caractérisé par le fait que** la plage de qualité de réception configurable, en présence d'un nombre trop petit de stations de réseau (BS(GSM), BS(UMTS)) utilisables pour l'échange de données, est étendue successivement à partir d'une valeur standard.

5. Procédé selon l'une des revendications précédentes, **caractérisé par le fait que** les informations de réseau ( RAT1, ..., RATx, Zelle1, ..., Zelle-y ) sont mémorisées en vue d'accès ultérieurs par des interfaces ( V ) et/ou stations de réseau ( BS ( GSM ), BS ( UMTS ) ) et/ou réseaux de communication ( GSM, UMTS ) au moins sélectionnés par la station ( MS ).

6. Procédé selon l'une des revendications précédentes, **caractérisé par le fait que** les dernières informations de réseau utilisées ( RAT1, ..., RATx, Zelle1, ..., Zelle-y ) sont mémorisées.

7. Procédé selon l'une des revendications précédentes, **caractérisé par le fait qu'**au moins une partie des informations de réseau ( RAT1, ..., RATx, Zelle1, ..., Zelle-y ) est mémorisée de façon à pouvoir être actualisée.

8. Procédé selon l'une des revendications précédentes, **caractérisé par le fait que** les informations de réseau ( RAT1, ..., RATx, Zelle1, ..., Zelle-y ) sont mémorisées dans la station ( MS ) ou sur un support de données utilisable dans la station ( MS ) .

9. Procédé selon l'une des revendications précédentes, **caractérisé par le fait que**, comme informations de réseau ( RAT1, ..., RATx, Zelle1, ..., Zelle-y ), des données d'accès sur différents réseaux radio accessibles ( RAT1, ..., RATx ) et/ou différentes cellules radio ( Zelle1, ..., Zelle-y ) sont mémorisées.

10. Procédé selon l'une des revendications 5 à 9, **caractérisé par le fait que**, en l'absence d'informations de réseau ( RAT1, ..., RATx, Zelle1, ..., Zelle-y ) mémorisées appropriées, d'autres interfaces ( V ) et/ou cellules ( Z, Z1, Z2 ) et/ou stations de réseau ( BS ( GSM ), BS ( UMTS ) ) et/ou réseaux de communication ( GSM, UMTS ) disponibles sont examinés par la station ( MS ) pour savoir s'ils conviennent à un établissement de liaison.

11. Procédé selon l'une des revendications précédentes, **caractérisé par le fait que** les informations de réseau ( RAT1, ..., RATx, Zelle1, ..., Zelle-y ) sont modifiées de manière dynamique pendant le fonctionnement.

12. Procédé selon l'une des revendications précédentes, **caractérisé par le fait que** les informations de réseau ( RAT1, ..., RATx, Zelle1, ..., Zelle-y ) ont des priorités différentes pour l'état de repos respectivement de liaison et/ou pour différents services et/ou ont des priorités à l'intérieur de technologies d'accès radio ( RAT1, ..., RATx ) et/ou cellules radio ( Zelle1, ..., Zelle-y ; Z, Z1, Z2 ) disponibles.

13. Station radio à modes de fonctionnement multiples ( MS ) pour l'exécution du procédé selon l'une des revendications précédentes, la station radio ( MS ) comportant :
- un dispositif d'émission et de réception pour échanger des données à chaque fois par l'intermédiaire d'au moins une interface ( V ) d'une station de réseau ( BS ) de différents réseaux de communication ( GSM, UMTS ),
- un dispositif de sélection pour déterminer et/ou sélectionner par priorité une interface ( V ) et/ou une station de réseau ( BS ) à l'aide de leurs informations de réseau ( RAT1, ..., RATx, Zelle1, ..., Zelle-y ) en vue de l'échange de données, et
- un dispositif de mémorisation ( X ) pour mémoriser les informations de réseau ( RAT1, ..., RATx, Zelle1, ..., Zelle-y ) ,
**caractérisée par le fait que**
- il est prévu dans le dispositif de mémorisation ( X ) un espace de mémorisation pour mémoriser en vue d'accès ultérieurs les informations de réseau ( RAT1, ..., RATx, Zelle1, ..., Zelle-y ) d'interfaces ( V ), stations de réseau ( BS ( GSM ), BS ( UMTS ) ) et/ou réseaux de communication ( GSM, UMTS ) utilisés par la station ( MS ) et au moins sélectionnés, et
- le dispositif de sélection est conçu pour déterminer les informations de réseau ( RAT1, ..., RATx, Zelle1, ..., Zelle-y ) en vue d'accès, changements de cellule et/ou handovers ultérieurs à l'aide de signaux ( BCCH, FCCH ) dans une plage de qualité de réception prédéterminée.
